# EUROPEAN PATENT SPECIFICATION

(11) **EP 1 406 782 B1**
(45) Date of publication and mention of the grant of the patent: **22.10.2008**
(21) Application number: 02749764.3
(22) Date of filing: 02.07.2002
(51) Int. Cl.: B60L 13/04

(54) **APPARATUS, SYSTEMS AND METHODS FOR LEVITATING AND MOVING OBJECTS**
VORRICHTUNG, SYSTEME UND VERFAHREN ZUM SCHWEBEN UND BEWEGEN VON OBJEKTEN
DISPOSITIF, SYSTEMES ET PROCEDES DE SUSTENTATION ET DE DEPLACEMENT D'OBJETS

(30) Priority: 02.07.2001 US 898536
(43) Date of publication of application: 14.04.2004
(73) Proprietor: Magna Force, Inc., Port Angeles, WA 98362-0326 (US)
(72) Inventor: LAMB, Karl, J., Sequim, WA 98382 (US); MERRILL, Toby, Port Angeles, WA 98362 (US); GOSSAGE, Scott, D., Port Angeles, WA 98363 (US); SPARKS, Michael, T., Port Angeles, WA 98362 (US); BARRETT, Michael, S., Port Angeles, WA 98363 (US)
(74) Representative: Eisenführ, Speiser & Partner
(86) International application number: PCT/US2002/021088
(87) International publication number: WO 2003/004302

(56) References cited:
- DE-A- 2 300 599
- DE-A- 19 908 344
- US-A- 4 486 729
- US-A- 5 317 976

## Description

### BACKGROUND OF THE INVENTION

### Field of Invention

The invention relates to apparatus, systems and methods for moving objects. More particularly, the invention relates to levitating, accelerating and decelerating objects with reduced friction and increased efficiency.

### Description of the Related Art

Magnetically levitated trains, conveyor systems and related means of transportation have been attempted many times in the past few decades in an effort to provide more efficient means of transportation for individuals and cargo. A few examples of such systems can be seen in U.S. Patent No. 4,356,772 to van der Heide; U.S. Patent No. 4,805,761 to Totsch; and U.S. Patent No. 5,601,029 to Geraghty et al. These systems operate on the general property that magnets having like polarities repel each other, and magnets having opposite polarities attract each other. Notwithstanding the fact that patent applications have been filed for such systems for decades, a system for moving people and cargo that is viable under real world conditions has yet to be developed.

Another system for magnetically levitating and moving an object is disclosed in prior art document US-A-5 317 976.

### SUMMARY OF THE INVENTION

The present invention is directed towards apparatus, systems and methods for levitating and accelerating objects according to claims 1, 17 and 18. In particular, embodiments of the present invention allow objects to be magnetically levitated and magnetically accelerated with respect to rails, such as train tracks.

In one embodiment, the system incorporates a number of lower rails spaced laterally apart from each other, and an object having a number of upper rails aligned with the lower rails. The lower rails have permanent magnets abutted one against the next and aligned such that the upper surface of the lower rail has a uniform polarity along its length. The lower rail also has a ferrous backing plate that electroconductively couples the permanent magnets along the length of the track. The upper rails have a number of permanent magnets aligned to oppose the magnets in the lower rails to levitate the object. The upper rails also have a ferrous backing plate electroconductively coupling the permanent magnets.

Another embodiment of the invention comprises a number of first rails, an object to be transferred, a third rail, and a driving disc. The first rails each have a number of permanent magnets aligned near its upper surface. The permanent magnets are oriented to create a uniform polarity along a length of each of the first rails. The object being transported has second rails that are configured to align with the first rails. The second rails have permanent magnets mounted thereon that are oriented to oppose the polarity of the magnets in the first rails. Consequently, the object levitates above the first rails. The third rail extends along the length of the first rails. The third rail is made from an electroconductive material, such as copper or aluminum. The disc is connected to the object being transported, and rotates with respect to the object. The disc carries a number of permanent magnets. The disc is positioned such that the permanent magnets are in close proximity to the third rail during operation. Rotation of the disc, and more importantly the permanent magnets, in the proximity of the third rail results in eddy currents that accelerate the object along the third rail in a direction opposite the relative rotation of the disc.

### BRIEF DESCRIPTION OF THE DRAWINGS

Figure 1 is an isometric view of a track and a cart levitating above the track according to one embodiment of the present invention:
Figure 2 is an isometric view of the cart of Figure 1.
Figure 3 is an isometric view of the cart of Figure 2 with a platform removed therefrom.
Figure 4 is an end view of a portion of the track and cart of Figure 1.
Figure 5 is an end view of the track and cart of Figure 1.
Figure 6 is an isometric view of a drive assembly of the cart of Figure 1.
Figure 7 is a sectional elevation view of a disc from the drive assembly of Figure 6 engaged with a third rail of the track of Figure 1, shown along a diametric section.
Figure 8 is a side view of one of the discs of Figure 7.
Figure 9 is an end view of a track and a cart from an alternate embodiment of the present invention.
Figure 9A is an enlarged view of a portion of the cart of Figure 9.
Figure 10 is a cross-sectional view of the cart of Figure 9, viewed along Section 10-10.
Figure 11A is a schematic view of the portion of the cart of Figure 10, shown in a disengaged configuration.
Figure 11B is the portion of the cart of Figure 11A, shown in an engaged configuration.
Figure 12 is an end view of a portion of the track and cart of Figure 9, illustrating a braking system in a disengaged configuration.
Figure 13 is the portion of the track and cart of Figure 12, shown with the braking system in an engaged configuration.
Figure 14 is a plan view of a magnet assembly from the cart of Figure 9.
Figure 15 is a cross-sectional view of the magnet assembly of Figure 14, viewed along Section 15-15.
Figure 16 is a plan view schematically illustrating a cart having magnets aligned for travel around a corner.
Figure 17 is a plan view schematically illustrating a cart having magnets aligned for linear travel.

### DETAILED DESCRIPTION OF THE ILLUSTRATED EMBODIMENTS

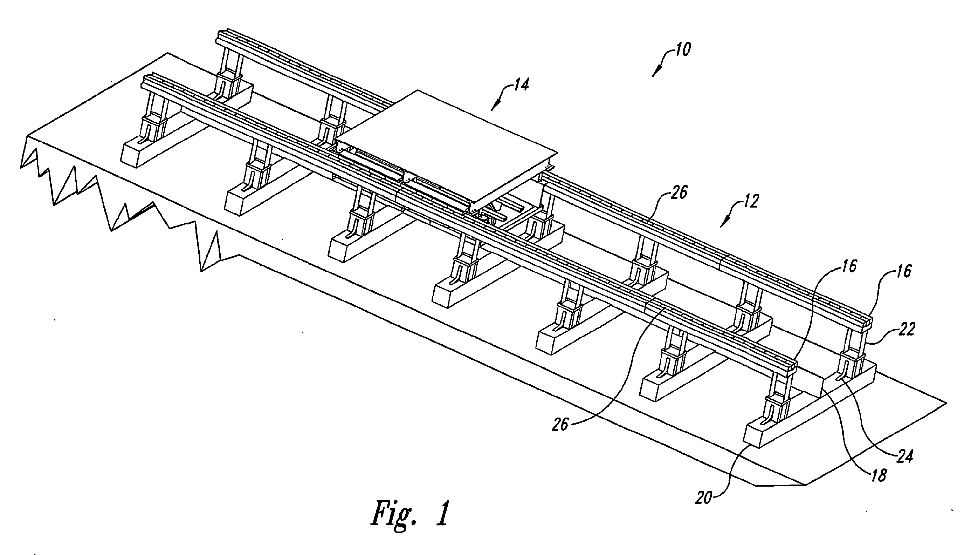

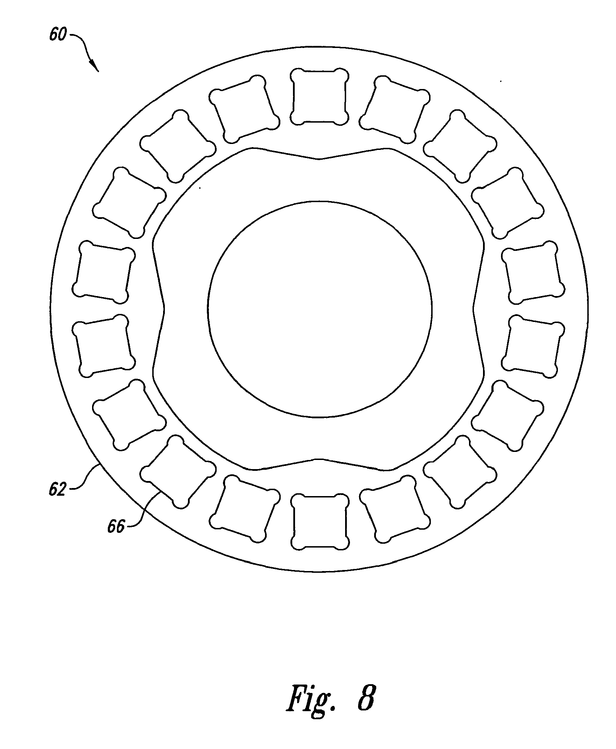

The present detailed description is generally directed toward systems, apparatus and methods for levitating a cart or other object above a track, and for accelerating the object with respect to the track. Several embodiments of the present invention may allow an individual to levitate an object above a track, and to accelerate and decelerate the object, all without contacting the track. Accordingly, such embodiments can provide highly efficient transportation means for individuals or cargo. Many specific details of certain embodiments of the invention are set forth in the following description and in Figures 1-17 to provide a thorough understanding of such embodiments. One skilled in the art, however, will understand that the present invention may have additional embodiments or may be practiced without several of the details described in the following description.

Figure 1 illustrates a system 10 for levitating and accelerating objects. The system 10 incorporates a track 12 and a cart 14 configured to move longitudinally in either direction with respect to the track. The track 12 incorporates a pair of supporting rails 16 and a driving rail 18.

In the illustrated embodiment, the supporting rails 16 and the driving rail 18 are supported by a number of footings 20 spaced apart from each other along a length of track 12. The footings 20 are anchored to the ground as generally understood in the art. The driving rail 18 in the illustrated embodiment is mounted directly to the footings 20, such as by a flange formed at the lower edge of the driving rail. The illustrated driving rail 18 is centrally located along the length of each of the footings 20. Depending on the particular design of the cart 14, however, it is envisioned that the driving rail 18 can be positioned at other locations inside, outside, above and below the supporting rails 16, as would be appreciated by one of ordinary skill in the relevant art.

In the illustrated embodiment, the supporting rails 16 are coupled to the footings 20 by a number of posts 22 and brackets 24, and extend along opposing ends of the footings. As with the driving rail 18, however, different configurations are possible, as one of ordinary skill in the art would appreciate.

The upper surface of each of the supporting rails 16 carries a number of permanent magnets 26 extending along an operable portion of its length. In the illustrated embodiment, the permanent magnets 26 in the supporting rails 16 are all of a common length. The illustrated permanent magnets 26 are butted against each other along the length of the track 12 to provide a magnetic force that is sufficiently constant to enable the cart 14 to move smoothly along the track. The permanent magnets 26 are oriented such that every magnet along the respective supporting rail 16 has its polarity vertically aligned with the adjacent permanent magnets. The inventor appreciates that it is not necessary that every permanent magnet 26 be aligned in order for the invention to operate. The illustrated embodiment, however, is provided as an example of one preferred embodiment.

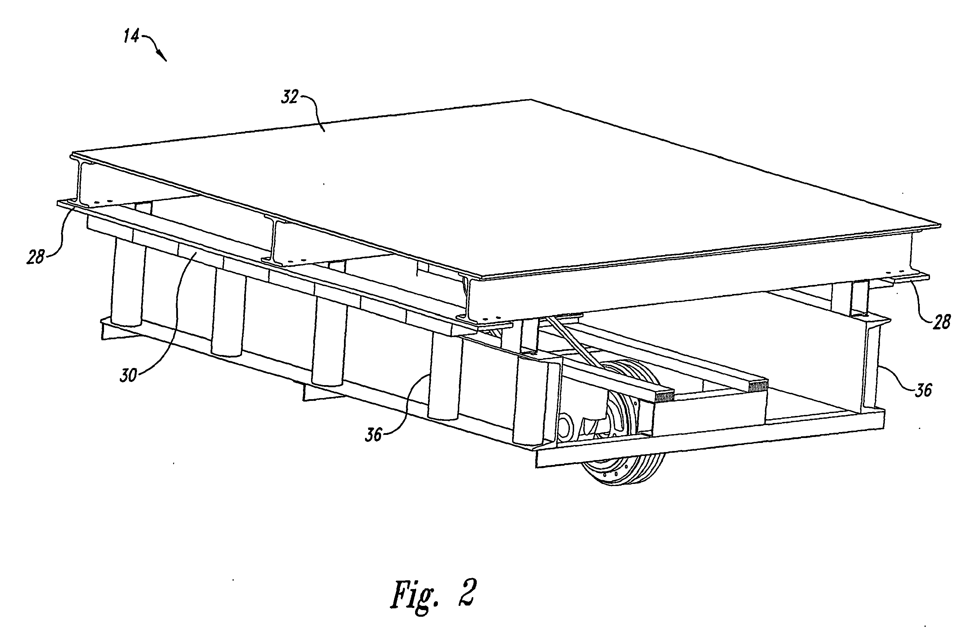

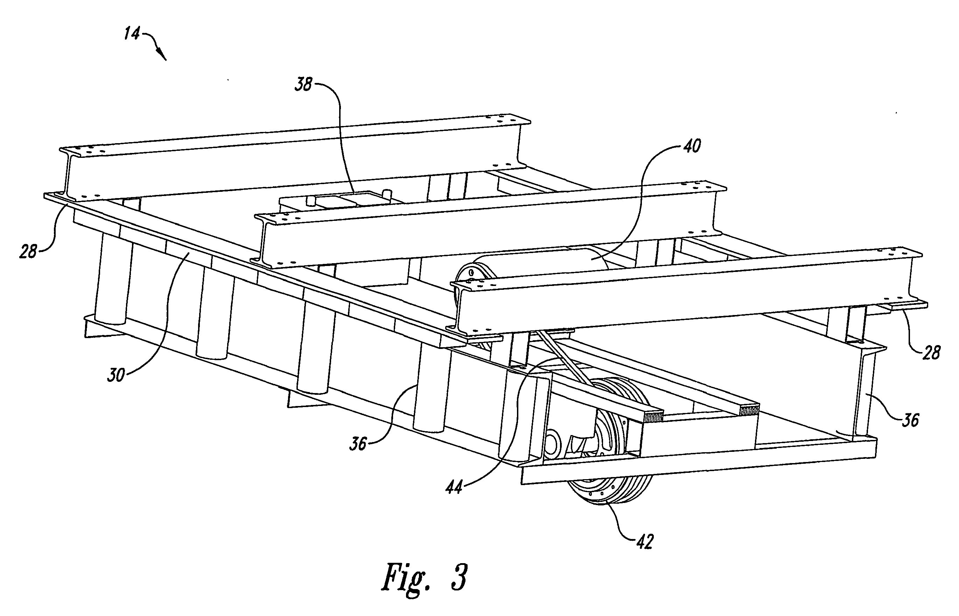

Figures 2 and 3 best illustrate the cart 14 according to this particular embodiment of the present invention. The cart 14 incorporates a pair of opposing side rails 28 spaced apart to generally align with the supporting rails 16 on the track 12. In the illustrated embodiment, the side rails are made from a ferrous material such as steel. Other materials of like qualities can be substituted for steel.

Attached to the underside of each of the side rails 28 is another set of permanent magnets 30 that align with the permanent magnets 26 on the supporting rails 16 when the cart 14 is engaged with the track 12. In the illustrated embodiment, the permanent magnets 30 in the side rails 28 are all of a common length. The length of each permanent magnet 26 in the supporting rail 16 is different, in this case longer, than the length of the permanent magnet 30 in the side rail 28. One of ordinary skill in the art; after reviewing this disclosure, will immediately appreciate that the difference in length prevents two adjacent seams in the support rail permanent magnets 26 from simultaneously aligning with two adjacent seams in the side rail permanent magnets 30, thus avoiding magnetic cogging. The permanent magnets 30 on the cart 14 are oriented with their polarities opposite to those of the permanent magnets 26 of the supporting rails 16. As a result, the cart 14 levitates above the track 12. In the illustrated embodiment, the permanent magnet 30 attached to the side rails 28 are abutted one against the next. The inventor appreciates, however, that these permanent magnets need not be in contact with each other for the cart 14 to have a smooth ride over the track 12.

The cart 14 has a platform 32 (Figure 2) for carrying individuals or objects. The present invention can be configured for carrying cargo or people and, as a result, the platform 32 can have a wide variety of configurations. For example, platform 32 can be in the shape of a train car or a cargo container. Likewise, the platform 32 and the cart 14 can be sized for carrying only small objects.

The sides of the cart 14 have a number of rollers 36 spaced apart lengthwise along the cart. Rollers 36 are positioned to contact the supporting rails 16 should the cart move out of proper alignment with the track 12. The rollers 36 rotate about vertical axes, and consequently do not significantly affect the movement of the cart 14 along the track 12. It is envisioned by the inventor that a wide variety of means can be substituted for the rollers 36 to keep the cart 14 centered along the track 12.

As illustrated in Figure 3, a battery 38, a motor 40 and a driving disc 42 are housed within this particular cart 14. The illustrated battery 38 is a 12-volt battery similar to one currently used in an automobile. The inventor appreciates, however, that a wide variety of power sources can be substituted for the battery 38, such as a fuel cell.

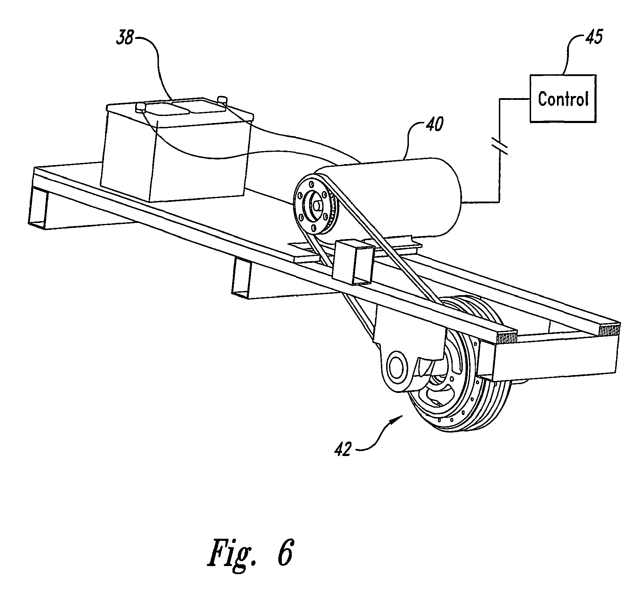

The motor 40 is coupled to the driving disc 42 by a belt 44. The inventor similarly appreciates, however, that the motor 40.and belt 44 can take other configurations, so long as the driving disc 42 can be controllably rotated to accelerate or decelerate the cart 14 with respect to the track 12. An onboard control system 45 (Figure 6) is incorporated to allow a user to controllably accelerate and decelerate the rotation of the driving disc 42 to control the velocity and acceleration of the cart 14.

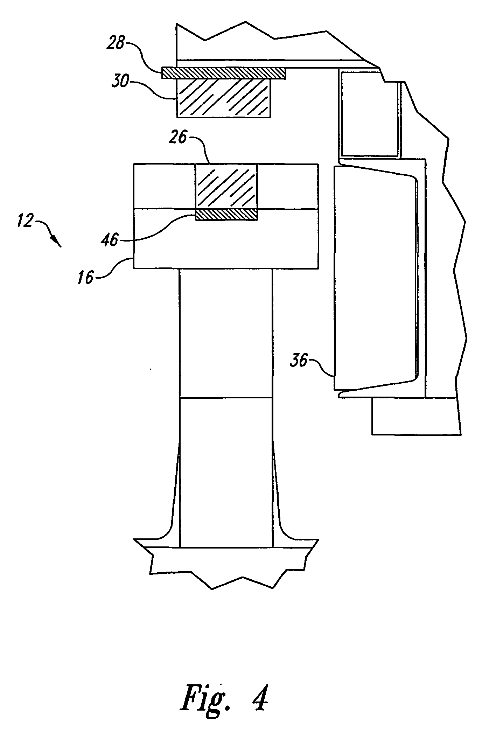

Figure 4 illustrates the relative orientation of the permanent magnets 30 on the side rails 28 of the cart 14 when engaged with the track 12. As discussed above, the polarity of the permanent magnets 30 is opposite the polarity of the permanent magnets 26. In addition, in this particular embodiment, the lateral dimension of the permanent magnets 30 is greater than the lateral dimension of the permanent magnets 26. The inventor appreciates that these permanent magnets 26, 30 can have the same dimensions, or the permanent magnets 26 could be larger than the permanent magnets 30. One of ordinary skill in the art will appreciate, however, that when the magnets are of the same width, as seen in the prior art, additional lateral support and/or controls are necessary to maintain optimal lateral stability between the magnets. On the contrary, in the illustrated embodiment, the magnetic footprint of the upper magnet 30 is wider than that of the lower magnet 26, naturally providing additional lateral stability.

A ferrous backing material 46 is positioned under the permanent magnets 26 in the supporting rail 16. As with the side rails 28, the ferrous backing material 46 can be steel or an equivalent materials. The backing 46 extends along the length of the side rail 16.

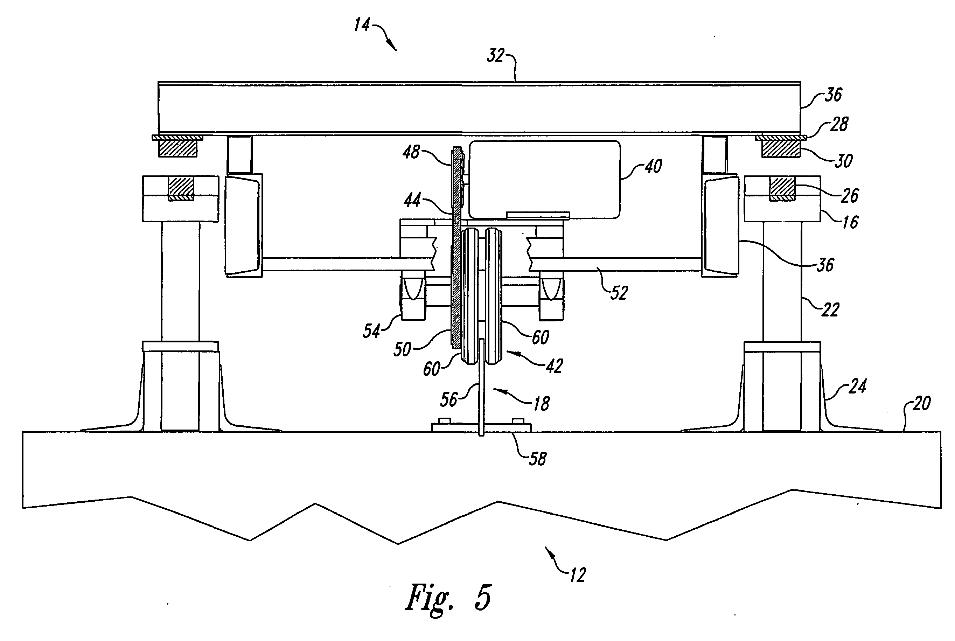

As best illustrated in Figure 5, a driving pulley 48 on the motor 40 operates the belt 44 to rotate a driven pulley 50 attached to the driving disc 42. The motor 40 is mounted on a cross-member 52, which is in turn mounted to the cart 14. Similarly, the driving disc 42 is mounted to an underside of the cross-member 52. The driving disc 42 is rotatably mounted on a pair bearings 54 to rotate with respect to the cart 14.

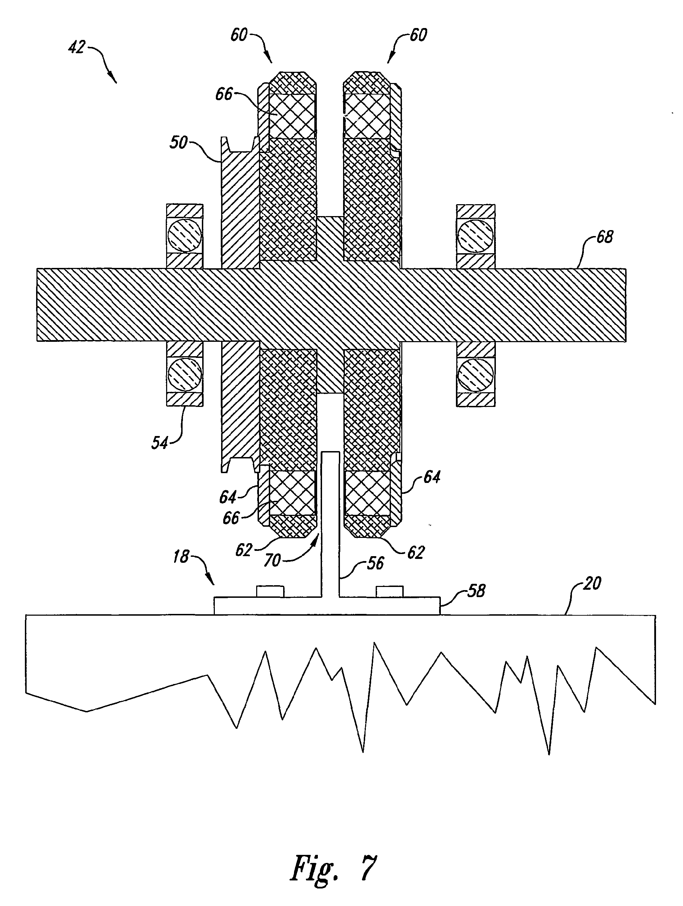

As illustrated in Figure 7, the third rail 18 has a neck 56 and a flange 58. The flange 58 is mounted to the footing 20 to retain the third rail 18 in a fixed alignment with respect to the track 12. The neck 56 is in the form of a flat plate extending the length of the track 12. The driving disc 42 in the illustrated embodiment has a pair of magnet rotors 60, spaced one on each side of the neck 56 of the third rail 18. Each of the magnet rotors 60 has a nonferrous mounting disc 62 backed by a ferrous backing disc 64, preferably of mild steel. The mounting discs 62 may be aluminium or a suitable nonmagnetic composite, and each is fabricated with a number of permanent magnets 66 spaced apart from each other and arranged in a circle about a shaft 68 carrying the driving disc 42. Each of the permanent magnets 66 abuts on the outside of the driving disc 42 against the respective backing disc 64. Adjacent permanent magnets 66 may have their polarities reversed. The permanent magnets 66 are each spaced by an air gap 70 from the neck 56.

The mounting discs 62 are mounted to the shaft 68 to rotate in unison with the shaft. Rotation of the driving disc 42 with respect to the neck 56 results in relative movement between the permanent magnets 66 and the neck in a direction generally tangential to the driving disc. This tangential direction aligns with the length of the track. As is generally known in the industry, relative movement between a permanent magnet and an electroconductive material results in an eddy current urging the electroconductive material to follow the permanent magnets. In the present case, however, because the electroconductive material in the neck 56 is fixed to the footing 20, the electroconductive material cannot follow the permanent magnets. Instead, an equal and opposite force is exerted on the cart which carries the permanent magnets 66. This opposing force accelerates the cart in a direction opposite to the movement of the permanent magnets 66. Accordingly, controlled rotation of the driving disc 42 with respect to the neck 56 can accelerate or decelerate the cart 14 with respect to the track 12.

It also understood in the industry that adjustable gap couplings can be used to increase and decrease the resultant forces between the permanent magnets 66 and the neck 56. The inventor makes reference to U.S. Patent No. 6,005,317; U.S. Patent No. 6,072,258; and U.S. Patent No. 6,242,832 to disclose various structures that can be used to adjust the spacing between the permanent magnets 66 and the neck 56. Further, the inventor appreciates that a single magnet rotor 62 can be used instead of a pair of magnet rotors.

Embodiments of the present invention have numerous advantages over conveyance systems of the prior art. For example, the aligned polarities in the tracks and the ferrous backing material combine to create a powerful and consistent magnetic force which allows substantial weight to be carried and allows for smooth movement as the weight is transported along the track. Similarly, ferrous backing material incorporated into the side rails of the cart provides like benefits.

In addition, the magnetic driving disc contained on the cart allows for closely controlled, efficient acceleration and deceleration. Because the driving disc does not contact the third rail, there is no wear between the two parts. Further, because the driving disc is contained on the cart, each cart can be independently controlled to accelerate and decelerate along the track.

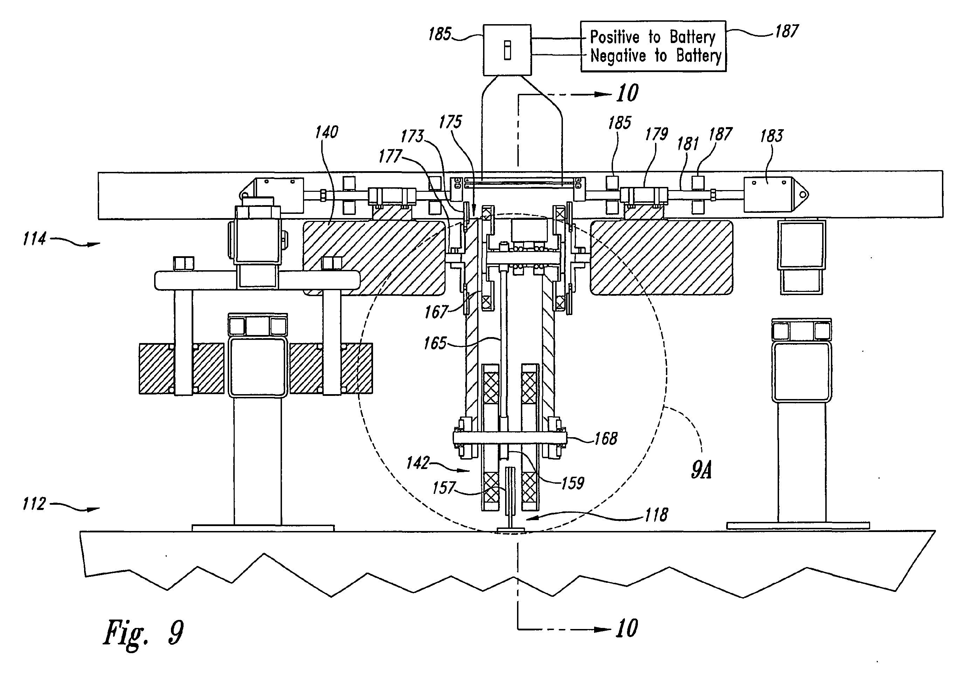

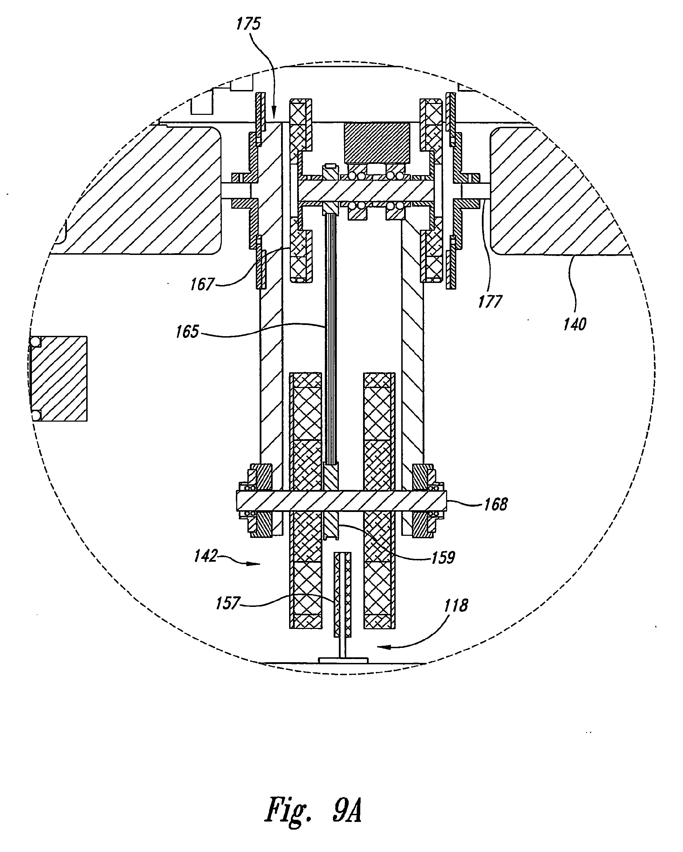

Figures 9 and 9A illustrate a track 112 and a cart 114 according to another embodiment of the present invention. In general, the cart 114 and track 112 illustrated in Figure 9 operate similar to that described above and illustrated in Figures 1-8. In particular, however, the guidance system and the drive system are both different than those described above. Accordingly, to the extent elements, features and advantages are not discussed below, they can be assumed to be similar to or identical to those described above.

In the illustrated embodiment, 9 drive rail 118 incorporates a flange 158 and a neck 156, similar to those described above. In addition, a cover plate 157 is positioned over opposing sides of the neck 156 and extends along the length of the drive rail 118. In this particular embodiment, the neck 156 and flange 158 are manufactured from steel, while the cover plate 157 is manufactured from aluminum. The inventors appreciate, however, that the cover plate 157 can be made from any other conductive material, the neck 156 can be made from any other material, preferably a ferrous material such as steel, and the flange 158 can be made from any suitable material. In the illustrated embodiment, the aluminum in the cover plate 157 serves as a conductor for a set of lower magnet rotors 142, and the steel in the neck 156 serves as a ferrous backing plate for each of the opposing cover plates.

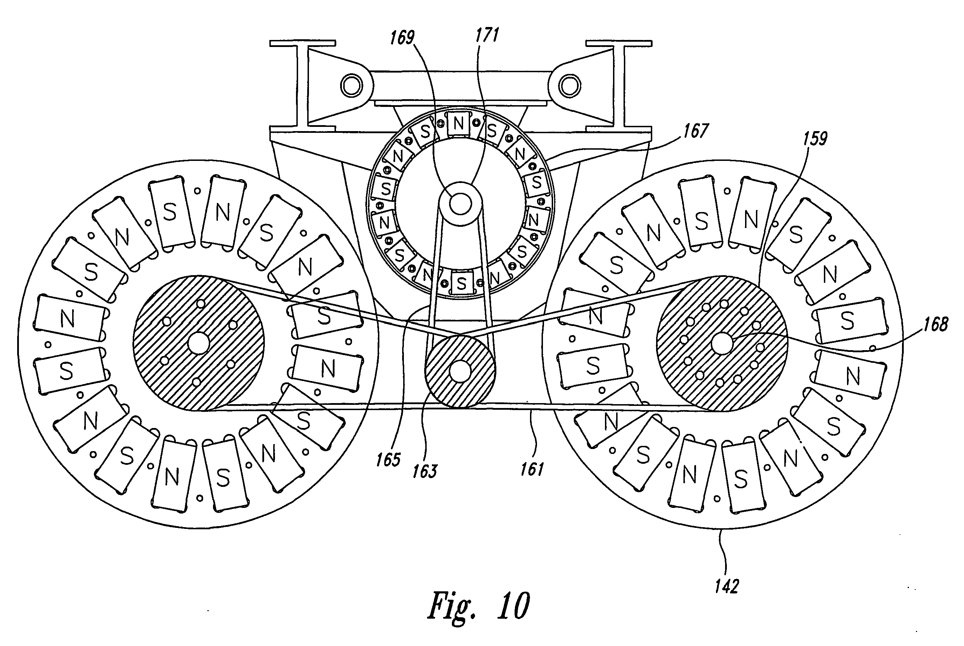

As with the above embodiment, the lower magnet rotors 142 are positioned on opposing sides of the drive rail 118, and are operable to accelerate and decelerate the cart 114 with respect to the track 112. In this particular embodiment, however, two pairs of opposing lower magnet rotors 142 are positioned one pair in front of the other along the drive rail 118 (best illustrated in Figure 10). Each pair of lower magnet rotors 142 rotates about a lower shaft 168 to create relative movement between the lower magnet rotor 142 and the drive rail 118 and accelerate or decelerate the cart 114 with respect to the track 112.

As seen in Figure 10, each lower shaft 168 has a sheave 159 fixed thereto to rotate the lower magnet rotor 142 in response to movement of a horizontal belt 161. The horizontal belts 161 are driven by a central pulley 163, which is in turn driven by a vertical belt 165. Unlike the prior embodiment, where the belt is driven directly by the motor 40, the vertical belt 165 in the present embodiment is driven by a pair of upper magnet rotors 167. These upper magnet rotors 167 share an upper shaft 169 and an upper pulley 171, which drives the vertical belt 165.

Rotation of the upper magnet rotors 167 about the upper shaft 169 results in rotation of the upper pulley 171, which in turn drives the vertical belt 165, rotating the central pulley 163. Rotation of the central pulley 163 drives the opposing horizontal belts 161, each of which drives a sheave 159 on one of the pairs of lower shafts 168. Rotation of the lower shaft 168 results in rotation of both pairs of lower magnet rotors 142. As discussed above, rotation of the magnet rotors 142 with respect to the drive rail 118 results in acceleration or deceleration of the cart 114 with respect to the track 112.

The velocity and power of the magnet rotors 167 is adjusted through axial movement of an opposing pair of conductor rotors 173 positioned to face the upper magnet rotors 167 from opposing sides. The conductor rotors 173 and opposing upper magnet rotors 167 function similar to adjustable gap couplings known in the art. As such, the torque transferred from the conductor rotors 173 to the upper magnet rotors 167 is varied by changing the size of a gap 175 therebetween. In the embodiment illustrated in Figure 9, the gap 175 in the coupling on the left end of the upper shaft 169 is greater than the gap on the right end of the upper shaft. The inventors appreciate that the two couplings cooperate to drive the upper shaft 169, and that the opposing couplings can be adjusted independently or in combination to increase or decrease the torque transferred from the conductor rotors 173 to the upper magnet rotors 167.

The gap 175 is adjusted by moving a motor 140 toward or away from the upper magnet rotor 167. The motor 140 has a drive shaft 177 projecting therefrom that is coupled to the conductor rotor 173. The motor 140 is mounted to the cart 114 at a sliding bushing 179, which moves laterally along an adjustment rod 181. The sliding bushing 179 can be moved back and forth along the adjustment rod 181 by a dual-acting air cylinder 183. The air cylinder 183 moves the sliding bushing 179 along the adjustment rod 181 between a pair of inner stops 185 and a pair of opposing outer stops 187. Because the conductor rotors 173 are mounted on the motors 140, axial movement of the motors results in axial movement of the conductor rotors and, as a result, adjustment of the gap 175.

The motors 140 are operated with an actuator, such as a switch 185 illustrated in Figure 9. The illustrated switch 185 is coupled between a source of electricity, such as a battery 187, and the motors 140, and can be actuated to rotate the motors in either direction to accelerate or decelerate the cart 114 with respect to the track 112.

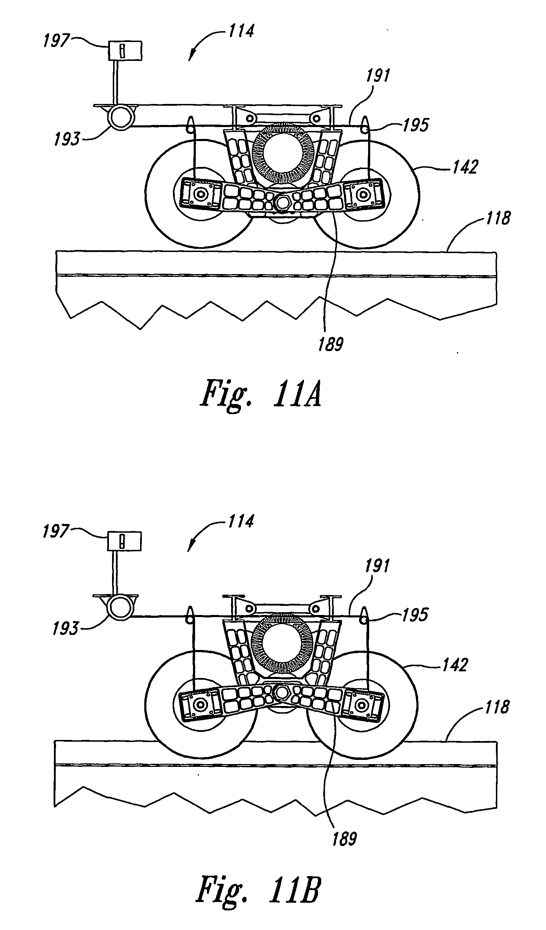

Figures 11A and 11B illustrate the lower magnet rotors 142 disengaged from the drive rail 118 and engaged with the drive rail, respectively. Each lower magnet rotor 142 is linked to the cart 114 by a swing arm 189 that is pivotally mounted to swing the magnet rotor around a substantially horizontal axis such that the magnet rotor moves vertically to engage with and disengage from the drive rail 118. A pair of cables 191 are routed from a winch 193 over pulleys 195, and are controlled by an actuator 197 to adjust the height of each of the lower magnet rotors 142.

The magnet rotors 142 can be raised or lowered to compensate for the weight of the payload on the cart 114. In particular, with a heavier payload, the cart 114 may ride lower on the track 112 and, to compensate, the magnet rotors 142 could be raised, or vice versa.

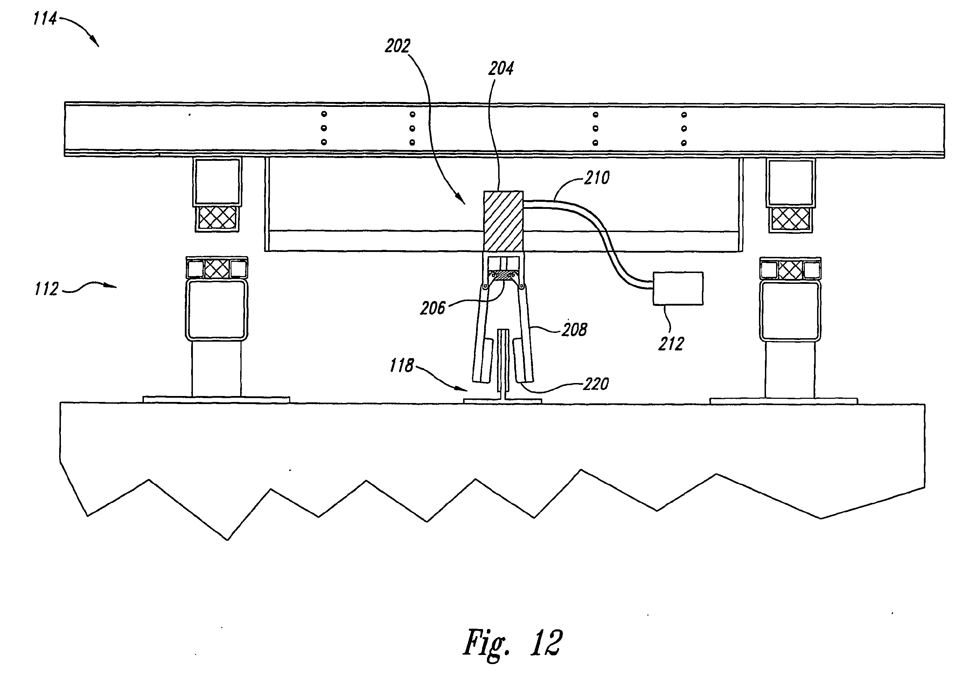

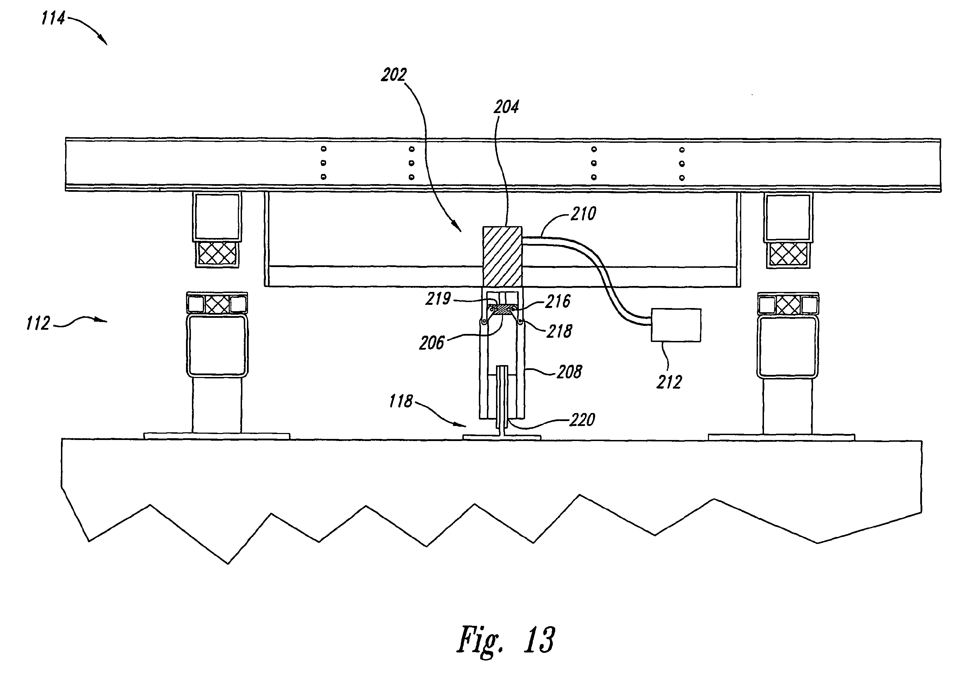

Figures 12 and 13 illustrated one particular braking assembly 202 according to an embodiment of the present invention. The braking assembly 202 is illustrated in the disengaged configuration in Figure 12 and in the engaged configuration in Figure 13.

The brake assembly 202 incorporates a pneumatic piston 204, an actuator 206 and a pair of opposing brake levers 208. The pneumatic piston 204 is connected by a pair of pneumatic lines 210 to a control unit 212. The control unit 212 directs pressurized air through the pneumatic lines 210 to or from the pneumatic piston 204 to pressurize an internal chamber therein (not shown) and to move a piston therein (not shown) axially with respect to the pneumatic piston. The actuator 206 is coupled to the internal piston to move with the internal piston as it is controlled by the control unit 212.

The brake levers 208 are coupled to the actuator 206 at a pair of elongated slots 214. When the actuator 206 moves downward, a pin 216 in the brake lever 208 slides inwardly along the slot 214. As the pin 216 moves inwardly along the slot 214, the brake lever 208 pivots around a pivot point 218 and the brake pads 220 rotate away from the drive rail 118. Likewise, when the actuator 206 moves upward as viewed in Figure 13, the pins 216 move outward along the slots 214 and the brake levers 208 rotate around the pivot points 218 to compress the brakes against the drive rail 118. Because the brake assembly 202 is rigidly attached to the cart 114, when the brake pads 220 compress against the drive rail 118, the cart can be brought to rest with respect to the track 112.

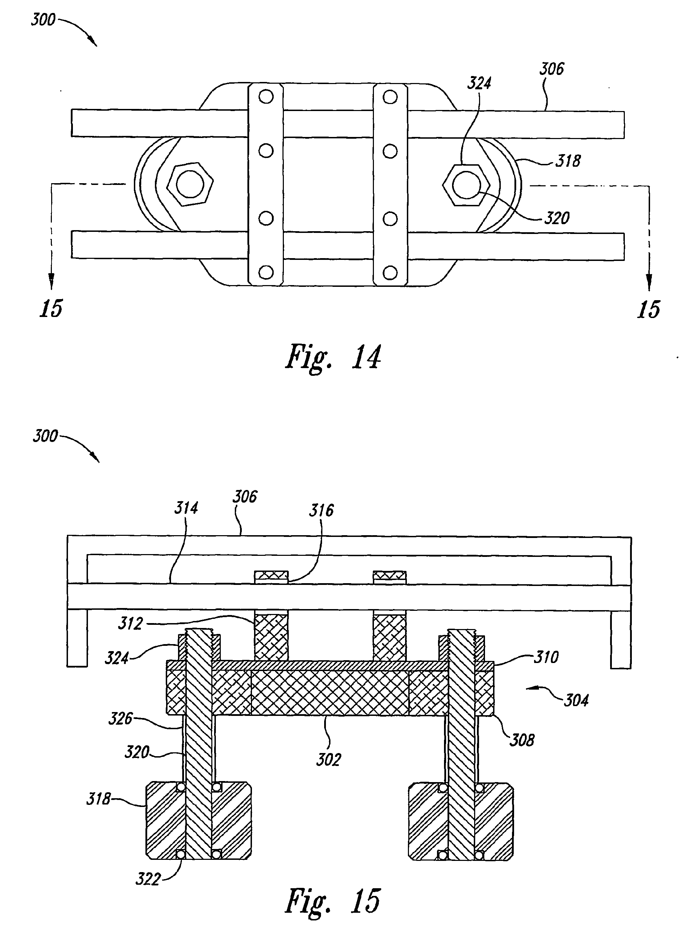

Figures 14 through 16 illustrate a magnet assembly 300 and a cart 314 configured with such a magnet assembly to facilitate maneuvering the cart around tight corners. As best illustrated in Figure 15, the magnet assembly 300 incorporates a permanent magnet 302 housed within a sliding carriage 304 to move laterally within a bracket 306. The sliding carriage 304 incorporates a body 308 that receives the magnet 303 facing downward and which has a ferrous backing plate 310 positioned above the body 308. The permanent magnet 302 contacts the ferrous backing plate 310 to increase the effect of the forces exerted by the permanent magnets onto the opposing magnet in the track (not shown). A pair of arms 312 connect the sliding carriage 304 to a transverse shaft 314. A bushing 316 is configured to allow the sliding carriage 304 to move along the length of the transverse shaft 314. A pair of rollers 318 are coupled to the sliding carriage 304 by respective mounting rods 320. The rollers 318 are retained by compression bearings 322 to their respective mounting rods 320, which are in turn retained to the sliding carriage 304 by respective nuts 324. The compression bearings 322 allow the rollers 318 to rotate freely about the mounting rods 320. A sleeve 326 positioned between the body 308 and the roller 318 maintains a desired spacing between the body and roller.

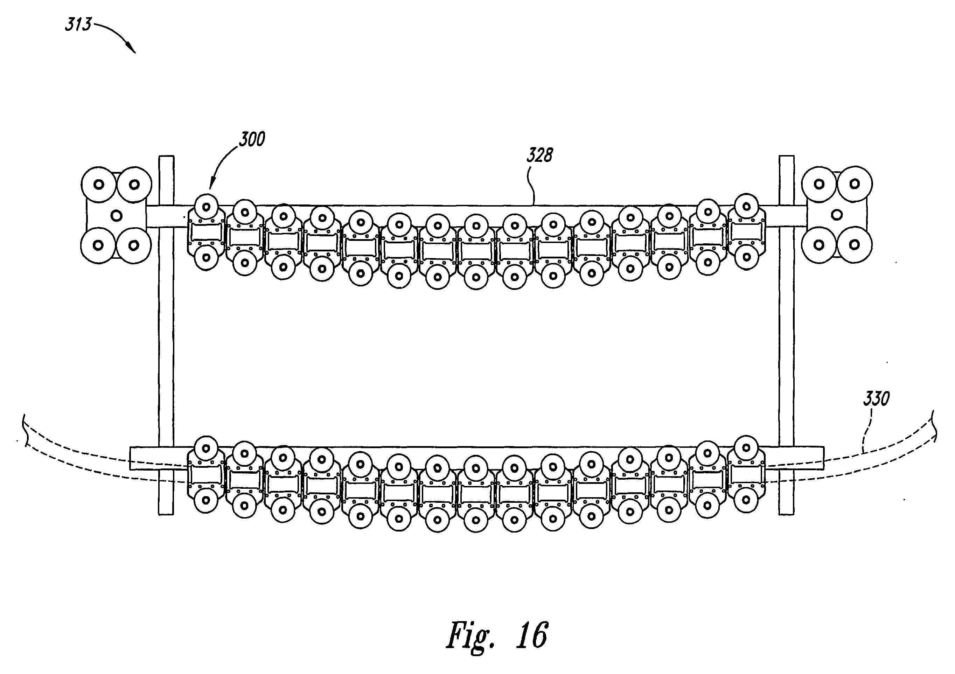

As illustrated in Figure 16, the magnet assemblies 300 are mounted by the brackets 306 to longitudinal structural members 328 on the cart 313. The transverse shafts 314 are oriented substantially perpendicular to the longitudinal structural members 328, such that the magnets assemblies 300 are free to move laterally with respect to the cart. The cart 313 illustrated in Figure 16 is configured for moving around a corner. As such, the magnet assemblies 300 have moved laterally to conform to the curved shape of the track 330. Because each magnet assembly 300 is free to move independent of the other magnet assemblies, the rollers 318 move each magnet assembly as necessary to conform to the particular track shape. The magnet assemblies 300 can be biased, such as by springs or other means, to move into a configuration for driving along a straight length of track. Likewise, the magnet assemblies 300 can be configured for moving without any restriction.

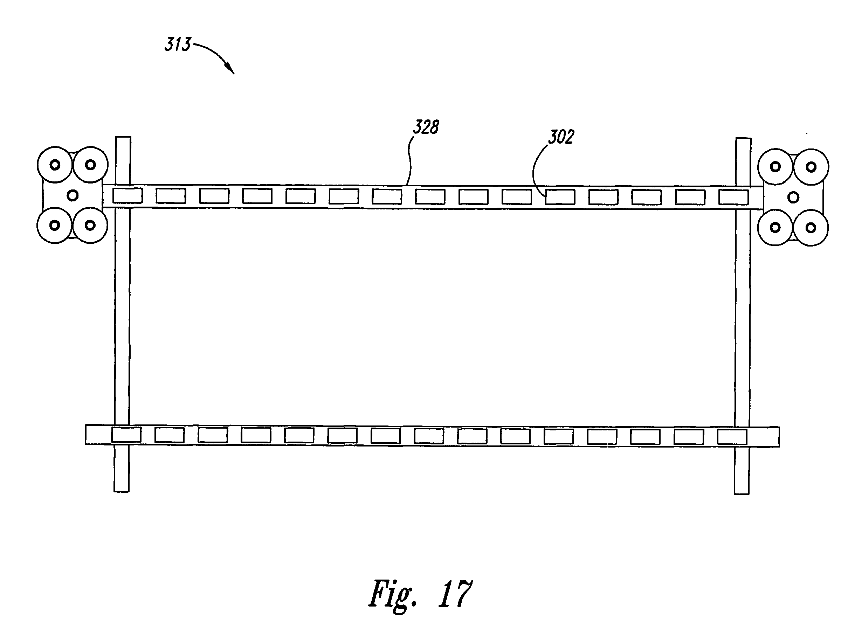

Figure 17 schematically illustrates the cart 313 of this alternative embodiment configured for movement along a straight length of track. The magnets 302 are all aligned with the longitudinal structural members 328 to allow the cart 313 to move along the track in a desired alignment.

Carts can also be fabricated with one, two or more driving discs to independently or collectively accelerate and decelerate the cart in the forward and reverse directions. Likewise, more or fewer supporting rails can be incorporated to modify the levitation forces and weight distribution characteristics of a particular system. As discussed above, the driving disc and third rail can be positioned in other locations, such as above the cart for "suspended" configurations. Other modifications and variations would be apparent to those of ordinary skill in the art. Accordingly, the scope of the invention should be interpreted only based on the claims below.

## Claims

1. A system for magnetically levitating and moving an object, the system comprising:
a track (12) having at least one first rail (16) extending along a length of the track, the first rail (16) carrying a plurality of first permanent magnets (26) having their poles aligned with each other such that an upper surface of each of the first rails (16) has a uniform polarity along an operable portion of the length, each first permanent magnet (26) having a first length measured in the direction of the track;
an object (14) having at least one second rail (28) configured to align with the at least one first rail (16), the second rail (28) carrying a plurality of second permanent magnets oriented to oppose the polarity of the permanent magnets (30) in the corresponding first rail (16) such that the object (14) levitates above the track, each second permanent magnet (30) having a second length measured in the direction of the track, the second length being different from the first length;
a third rail (18) made from an electroconductive material, the third rail extending the length of the track; and
at least one disc (42) coupled to the object (14) to rotate about a rotary axis with respect to the object, the at least one disc (42) having a plurality of permanent magnets (66) spaced about the rotary axis, the at least one disc (42) being positioned with a portion thereof in close proximity to the third rail (18) and being controllably rotatable in the presence of the third rail (18) to create an eddy current between the permanent magnets in the disc (42) and the electroconductive material of the third rail (18) to accelerate and decelerate the object (14) with respect to the track (12).

2. The system of claim 1 wherein the plurality of first rails (12) comprises two first rails (12).

3. The system of claim 1 wherein each of the plurality of first permanent magnets (26) in the first rail (16) is in contact with the adjacent first permanent magnets (26) in the respective first rail (16).

4. The system of claim 1 wherein a lateral dimension of the first permanent magnets (26) is different from a corresponding lateral dimension of the second permanent magnets (30).

5. The system of claim 1 wherein a lateral dimension of the first permanent magnets (26) is smaller than a corresponding lateral dimension of the second permanent magnets (30).

6. The system of claim 1, further comprising a ferrous keeper member (46) in contact with the plurality of first permanent magnets (26) in the at least one first rail (16).

7. The system of claim 1, further comprising a first ferrous keeper member (46) in contact with the plurality of first permanent magnets (26) and a second ferrous keeper member (64) in contact with the second plurality of permanent magnets (30).

8. The system of claim 1, further comprising a ferrous keeper member (46) in contact with the plurality of first permanent magnets (26), the keeper member (46) being positioned on a surface of the first permanent magnets (26) furthest from the upper surface of the rail (16).

9. The system of claim 1, further comprising a ferrous keeper (46) and an electroconductive cover the at least one first rail (16), the keeper being in contact with the first permanent magnets (26) and being positioned of a surface of the first permanent magnets (26) furthest from the upper surface of the rail, the cover being positioned over the upper surface of the first rail (16).

10. The system of claim 1, further comprising guide members (36) coupled to the track (12) and the object (14) to maintain the object (14) aligned with the track.

11. The system of claim 1, further comprising guide members (36) coupled to the track (12) and complementary rollers (36) coupled to the object to maintain the object aligned with the track.

12. The system of claim 1, further comprising rollers (36) coupled to the object, the rollers (36) being spaced apart by a gap from the rails maintain the object (14) aligned with the track (12).

13. The system of claim 1 wherein the third rail (18) is in the form of an elongated plate and the rotary axis is at least substantially perpendicular to the plate.

14. The system of claim 1 wherein the at least one disc (42) comprises a pair of discs positioned to rotate in proximity to the third rail (18).

15. The system of claim 1 wherein the at least one disc (42) is movably coupled to the object (14) to controllably move between an engaged position in which the permanent magnets in the disc are proximate the third rail (18), and a disengaged position in which the permanent magnets in the disc (42) are spaced apart from the third rail (18) by a distance sufficient to at least substantially eliminate the eddy current therebetween.

16. The system of claim 1 wherein the at least one disc (42) comprises a pair of discs positioned to rotate in proximity to the third rail (18), the pair of discs (42) being movably coupled to the object to controllably move between an engaged position in which the permanent magnets in the disc (42) are proximate the third rail (18), and a disengaged position in which the permanent magnets in the disc (42) are spaced apart from the third rail (18) by a distance sufficient to at least substantially eliminate the eddy current therebetween.

17. A method for levitating an object (14) above a track (12) and moving the object along the track (12), the method comprising:
fixing to the track (12) a first plurality of permanent magnets (26) with their polarities upwardly aligned;
contacting each of the first plurality of permanent magnets (26) with a ferrous material (46);
providing an object (14) having a second plurality of permanent magnets (30) positioned to align with the track (12), the second plurality of permanent magnets (30) having their polarities aligned to oppose the first plurality of permanent magnets (26);
contacting each of the second plurality of permanent magnets (30) with a ferrous material (64);
positioning a rail (18) of electroconductive material along the length of the track (12); and
rotating a disc (42) carrying permanent magnets (66) in the proximity of the rail (18) of electroconductive material such that an eddy force between the rail (18) and the permanent magnets (66) in the disc (42) cause the object (14) to move with respect to the track (12).

18. A cart (14) for levitating above and moving along a length of a track (12) having a pair of first track rails (16) each having a plurality of track permanent magnets (26) of aligned polarity thereon, and a second track rail (18) made of electroconductive material extending along the length of the track, the cart (14) comprising:
a pair of cart rails (28) at least substantially alignable with the pair of first track rails (16);
a plurality of cart permanent magnets (30) coupled to the pair of cart rails (28) and aligned to oppose the polarity of the permanent magnets in the first track rails (16) such that the cart levitates above the track (12);
a ferrous keeper (64) contacting the plurality of car permanent magnets (30); and
a disc (42) coupled to the cart to rotate about a rotary axis with respect to the cart, the disc (42) having a plurality of permanent magnets (66) spaced about the rotary axis, the disc (42) being positioned with a portion thereof in close proximity to the second track rail (18) and being controllably rotatable in the presence of the second track rail (18) to create an eddy current between the permanent magnets (66) in the disc (42) and the electroconductive material of the second track rail (18) to accelerate and decelerate the cart with respect to the track.

19. The cart of claim 18, further comprising guide members coupled to the cart to maintain the cart aligned with the track.

20. The cart of claim 18, further comprising rollers (36) coupled to the cart, the rollers being positioned to be spaced apart by a gap from the first rails to maintain the cart aligned with the track.

21. The cart of claim 18 wherein the second track rail is in the form of an elongated plate and the wherein rotary axis is aligned to be at least substantially perpendicular to the plate.

22. The cart of claim 18 wherein the plurality of cart permanent magnets are movably coupled to the pair of cart rails (28).

23. The cart of claim 18 wherein the plurality of cart permanent magnets (30) are coupled to the pair of cart rails (28) in a manner that allows each of the plurality of cart permanent magnets (30) to move laterally with respect to the respective cart rail (28).

24. The cart of claim 18 wherein the plurality of cart permanent magnets (30) are slidably coupled to the pair of cart rails to move laterally with respect to the respective third rail.

25. The cart of claim 18 wherein the plurality of cart permanent magnets (30) are slidably coupled to the pair of cart rails to move laterally with respect to the respective cart rail, and further comprising at least one guide member coupled to each of the plurality of cart permanent magnets, the at least one guide member being positioned to contact one of the first track rails (16) during operation such that lateral movement of the cart (14) with respect to the track results in lateral movement of at least one of the plurality of cart magnets (30).

## Patentansprüche

1. System zum Magnetschweben und zum Bewegen eines Objektes, mit:
einer Bahn (12) mit zumindest einer ersten Schiene (16), die sich entlang der Länge der Bahn erstreckt, wobei die erste Schiene (16) eine Vielzahl von ersten Permanentmagneten (26) trägt, deren Pole miteinander so ausgerichtet sind, dass eine obere Oberfläche jeder der ersten Schienen (16) eine gleichartige Polarität entlang eines betriebsfähigen Abschnitts der Länge aufweist, wobei jeder erste Permanentmagnet (26) eine erste Länge aufweist, die in Richtung der Bahn gemessen wird;
einem Objekt (14) mit zumindest einer zweiten Schiene (28), die dazu ausgestaltet ist, sich an der zumindest einen ersten Schiene (16) auszurichten, wobei die zweite Schiene (28) eine Vielzahl von zweiten Permanentmagneten trägt, die ausgerichtet sind, der Polarität der Permanentmagnete in der entsprechenden ersten Schiene (16) entgegen zu stehen, so dass das Objekt (14) über der Bahn schwebt, wobei jeder zweite Permanentmagnet (30) eine zweite Länge aufweist, die in der Richtung der Bahn gemessen wird, wobei sich die zweite Länge von der ersten Länge unterscheidet;
einer dritten Schiene (18), die aus einem elektrisch leitenden Material hergestellt ist, wobei sich die dritte Schiene entlang der Länge der Bahn erstreckt; und
zumindest einer Scheibe (42), die mit dem Objekt (14) gekoppelt ist, um sich um eine Drehachse bezüglich des Objektes zu drehen, wobei die zumindest eine Scheibe (42) eine Vielzahl von Permanentmagneten (66) aufweist, die um die Drehachse angeordnet sind, wobei die zumindest eine Scheibe (42) mit einem Abschnitt der zumindest einen Scheibe in unmittelbarer Nähe zu der dritten Schiene (18) angeordnet ist, und wobei die zumindest eine Scheibe (42) in der Gegenwart der dritten Schiene (18) steuerbar drehbar ist, um einen Wirbelstrom zwischen den Permanentmagneten in der Scheibe (42) und dem elektrisch leitenden Material der dritten Schiene (18) zu erzeugen, um das Objekt (14) bezüglich der Bahn (12) zu beschleunigen und abzubremsen.

2. System nach Anspruch 1, wobei die Vielzahl der ersten Schienen (12) zwei erste Schienen (12) aufweist.

3. System nach Anspruch 1, wobei jeder der Vielzahl von ersten Permanentmagneten (26) in der ersten Schiene (16) in Kontakt mit den benachbarten ersten Permanentmagneten (26) in der entsprechenden ersten Schiene (16) ist.

4. System nach Anspruch 1, wobei sich eine laterale Dimension der ersten Permanentmagnete (26) von einer entsprechenden lateralen Dimension der zweiten Permanentmagnete (30) unterscheidet.

5. System nach Anspruch 1, wobei eine laterale Dimension der ersten Permanentmagnete (26) kleiner ist als eine entsprechende laterale Dimension der zweiten Permanentmagnete (30).

6. System nach Anspruch 1, ferner mit einem eisenhaltigen Grundelement (46) in Kontakt mit der Vielzahl von ersten Permanentmagneten (26) in der zumindest einen ersten Schiene (16).

7. System nach Anspruch 1, ferner mit einem ersten eisenhaltigen Grundelement (46) in Kontakt mit der Vielzahl der ersten Permanentmagnete (26) und einem zweiten eisenhaltigen Grundelement (64) in Kontakt mit der zweiten Vielzahl von Permanentmagneten (30).

8. System nach Anspruch 1, ferner mit einem eisenhaltigen Grundelement (46) in Kontakt mit der Vielzahl von ersten Permanentmagneten (26), wobei das Grundelement (46) auf der Oberfläche der ersten Permanentmagnete (26) am weitesten von der oberen Oberfläche der Schiene (16) angeordnet ist.

9. System nach Anspruch 1, ferner mit einem eisenhaltigen Grundelement (46) und einer elektrisch leitenden Abdeckung für die zumindest eine erste Schiene (16), wobei das Grundelement in Kontakt mit den ersten Permanentmagneten (26) ist und auf einer Oberfläche der ersten Permanentmagnete (26) am weitesten von der oberen Oberfläche der Schiene angeordnet ist, wobei die Abdeckung über der oberen Oberfläche der ersten Schiene (16) angeordnet ist.

10. System nach Anspruch 1, ferner mit Führungselementen (36), die mit der Bahn (12) und mit dem Objekt (14) gekoppelt sind, um das Objekt (14) ausgerichtet an der Bahn zu halten.

11. System nach Anspruch 1, ferner mit Führungselementen (36), die mit der Bahn (12) gekoppelt sind, und komplementären Rollen (36), die mit dem Objekt gekoppelt sind, um das Objekt ausgerichtet an der Bahn zu halten.

12. System nach Anspruch 1, ferner mit Rollen (36), die mit dem Objekt gekoppelt sind, wobei die Rollen (36) mit einem Spalt von den Schienen beabstandet sind, um das Objekt (14) an der Bahn (12) ausgerichtet zu halten.

13. System nach Anspruch 1, wobei die dritte Schiene (18) in der Form einer gestreckten Platte ausgestaltet ist und die Drehachse zumindest im Wesentlichen rechtwinklig zu der Platte liegt.

14. System nach Anspruch 1, wobei die zumindest eine Scheibe (42) ein Paar von Scheiben umfasst, die angeordnet sind, um sich in der Nachbarschaft der dritten Schiene (18) zu drehen.

15. System nach Anspruch 1, wobei die zumindest eine Scheibe (42) bewegbar mit dem Objekt (14) gekoppelt ist, um sich zwischen einer aktiven Position, in der die Permanentmagnete in der Scheibe in der Nähe der dritten Schiene (18) sind, und einer passiven Position, in der die Permanentmagnete in der Scheibe (42) mit einer Entfernung, die ausreicht, zumindest im Wesentlichen die Wirbelströme dazwischen zu beseitigen, entfernt von der dritten Schiene (18) angeordnet sind, steuerbar zu bewegen.

16. System nach Anspruch 1, wobei die zumindest eine Scheibe (42) ein Paar von Scheiben umfasst, die angeordnet sind, um in der Nähe der dritten Schiene (18) zu rotieren, wobei das Paar der Scheiben (42) bewegbar mit dem Objekt gekoppelt ist, um sich zwischen einer aktiven Position, in der die Permanentmagnete in der Scheibe (42) in der Nähe der dritten Schiene (18) sind, und einer passiven Position, in der die Permanentmagnete in der Scheibe (42) mit einer Entfernung, die ausreicht, um zumindest im Wesentlichen die Wirbelströme dazwischen zu beseitigen, entfernt von der dritten Schiene (18) angeordnet sind, steuerbar zu bewegen.

17. Verfahren zum Schweben lassen eines Objektes (14) über einer Bahn (12) und zum Bewegen des Objektes entlang der Bahn (12), wobei das Verfahren aufweist:
Befestigen einer ersten Vielzahl von Permanentmagneten (26) mit ihrer Polarität aufwärts ausgerichtet an der Bahn (12);
Kontaktieren jedes von der ersten Vielzahl von Permanentmagneten (26) mit einem eisenhaltigen Material (46);
Bereitstellen eines Objektes (14) mit einer zweiten Vielzahl von Permanentmagneten (30), die angeordnet sind, um sich an der Bahn (12) auszurichten, wobei die zweite Vielzahl von Permanentmagneten (30) ihre Polaritäten ausgerichtet haben, um der ersten Vielzahl von Permanentmagneten (26) entgegen zu stehen;
Kontaktieren jedes von der zweiten Vielzahl von Permanentmagneten (30) mit einem eisenhaltigen Material (64);
Anordnen einer Schiene (18) aus elektrisch leitendem Material entlang der Länge der Bahn (12); und
Drehen einer Scheibe (42), die Permanentmagnete (66) trägt, in der Nähe der Schiene (18) aus elektrisch leitendem Material, so dass eine Wirbelstromkraft zwischen der Schiene (18) und den Permanentmagneten (66) in der Scheibe (42) derart verursacht wird, dass sich das Objekt (14) mit Bezug zu der Bahn (12) bewegt.

18. Ein Wagen (14) zum Schweben über und zum Bewegen entlang einer Länge von einer Bahn (12) mit einem Paar von ersten Bahnschienen (16), wobei sich auf jeder Bahnschiene eine Vielzahl von Bahnpermanentmagneten (26) mit ausgerichteter Polarität befinden, und mit einer zweiten Bahnschiene (18), die aus elektrisch leitendem Material hergestellt ist und sich entlang der Länge der Bahn erstreckt, mit:
einem Paar von Wagenschienen (28), die zumindest im Wesentlichen an dem Paar der ersten Bahnschienen (16) ausrichtbar sind;
einer Vielzahl von Wagenpermanentmagneten (30), die mit dem Paar der Wagenschienen (28) gekoppelt sind und die ausgerichtet sind, um der Polarität der Permanentmagnete in den ersten Bahnschienen (16) entgegen zu stehen, so dass der Wagen über der Bahn (12) schwebt;
einem eisenhaltigen Grundelement (64), das die Vielzahl von Wagenpermanentmagneten (30) kontaktiert; und
einer Scheibe (42), die mit dem Wagen gekoppelt ist, um bezüglich des Wagens um eine Drehachse zu rotieren, wobei die Scheibe (42) eine Vielzahl von Permanentmagneten (66) aufweist, die um die Drehachse angeordnet sind, wobei die Scheibe (42) mit einem Abschnitt der Scheibe in naher Umgebung zu der zweiten Bahnschiene (18) angeordnet ist und wobei die Scheibe (42) in der Gegenwart der zweiten Bahnschiene (18) steuerbar drehbar ist, um einen Wirbelstrom zwischen den Permanentmagneten (66) in der Scheibe (42) und dem elektrisch leitenden Material der zweiten Bahnschiene (18) zu erzeugen, um den Wagen bezüglich der Bahn zu beschleunigen und abzubremsen.

19. Wagen nach Anspruch 18, ferner mit einem Führungselement, das mit dem Wagen gekoppelt ist, um den Wagen an der Bahn ausgerichtet zu halten.

20. Wagen nach Anspruch 18, ferner mit Rollen (36), die mit dem Wagen gekoppelt sind, wobei die Rollen angeordnet sind, um durch einen Spalt von den ersten Schienen beabstandet zu sein, um den Wagen an der Bahn ausgerichtet zu halten.

21. Wagen nach Anspruch 18, wobei die zweite Bahnschiene die Form einer ausgestreckten Platte aufweist und wobei die Drehachse ausgerichtet ist, um zumindest im Wesentlichen rechtwinklig zu der Platte zu sein.

22. Wagen nach Anspruch 18, wobei die Vielzahl von Wagenpermanentmagneten mit dem Paar der Wagenschienen (28) bewegbar gekoppelt sind.

23. Wagen nach Anspruch 18, wobei die Vielzahl von Wagenpermanentmagneten (30) mit dem Paar von Wagenschienen (28) derart gekoppelt sind, dass sich jeder von der Vielzahl von Wagenpermanentmagneten (30) lateral mit Bezug zu der jeweiligen Wagenschiene (28) bewegt.

24. Wagen nach Anspruch 18, wobei die Vielzahl von Wagenpermanentmagneten (30) mit dem Paar von Wagenschienen verschiebbar gekoppelt ist, um sich lateral mit Bezug zu der jeweiligen dritten Schiene zu bewegen.

25. Wagen nach Anspruch 18, wobei die Vielzahl von Wagenpermanentmagneten (30) mit dem Paar von Wagenschienen verschiebbar gekoppelt ist, um sich lateral mit Bezug zu den jeweiligen Wagenschienen zu bewegen, und wobei der Wagen weiterhin zumindest ein Führungselement umfasst, das mit jedem von der Vielzahl von Wagenpermanentmagneten gekoppelt ist, wobei das zumindest eine Führungselement angeordnet ist, um eine der ersten Bahnschienen (16) während des Betriebs zu kontaktieren, so dass eine laterale Bewegung des Wagens (14) bezüglich der Bahn in eine laterale Bewegung von zumindest einem der Vielzahl von Wagenmagneten (30) resultiert.

## Revendications

1. Un système de sustentation magnétique et de déplacement d'un objet, le système comportant :
une voie (12) comportant au moins un premier rail (16) s'étendant suivant la longueur de la voie, le premier rail (16) portant une pluralité d'aimants permanents premiers (26) ayant leurs pôles alignés les uns avec les autres de telle manière que la surface supérieure de chacun dudit au moins premier rail (16) présente une polarité uniforme le long d'une partie utilisable de la longueur, chacun des premiers aimants permanents (26) ayant une première longueur mesurée suivant la direction de la voie;
un objet (14) ayant au moins un second rail (28) disposé en alignement avec ledit au moins premier rail (16), le second rail (28) comportant une pluralité de seconds aimants permanents dont la polarité est en opposition par rapport à celle des aimants permanents (30) du premier rail correspondant (16) de manière à amener l'objet (14) en sustentation au-dessus de la voie, chacun des aimants permanents seconds (30) ayant une seconde longueur mesurée suivant la direction de la voie, la seconde longueur étant différente de la première longueur;
un troisième rail (18) réalisé dans un matériau électro-conducteur, le troisième rail s'étendant le long de la voie ; et
au moins un disque (42) attelé à l'objet (14) et mobile en rotation autour d'un axe de rotation relativement à l'objet, le ou les disques (42) ayant une pluralité d'aimants permanents (66) disposés autour de l'axe de rotation, le ou les disques (42) disposant d'une partie positionnée dans un proche voisinage du troisième rail (18) et dont l'entraînement en rotation en présence du troisième rail engendre un courant tourbillonnant entre les aimants permanents du disque (42) et le matériau électroconducteur du troisième rail (18) permettant l'accélération ou le freinage de l'objet (14) relativement à la voie (12).

2. Le système selon la revendication 1 dans lequel la pluralité de premiers rails comporte deux premiers rails (12).

3. Le système selon la revendication 1, dans lequel chacun de la pluralité des premiers aimants permanents (26) du premier rail (16) est en contact avec les premiers aimants permanents adjacents du premier rail respectif (16).

4. Le système selon la revendication 1, dans lequel une dimension latérale des premiers aimants permanents (26) est différente de la dimension latérale correspondante des seconds aimants permanents (30).

5. Le système selon la revendication 1, dans lequel une dimension latérale des premiers aimants permanents (26) est plus petite que la dimension latérale correspondante des seconds aimants permanents (30).

6. Le système selon la revendication 1, comportant en outre un élément ferreux de maintien (46) en contact avec la pluralité de premiers aimants permanents dudit au moins premier rail (16).

7. Le système selon la revendication 1 comportant en outre un premier élément ferreux de maintien (46) en contact avec la pluralité de premiers aimants permanents (26) et un second élément ferreux de maintien (64) en contact avec la pluralité de seconds aimants permanents (30).

8. Le système selon la revendication 1, comportant en outre un élément ferreux de maintien (46) en contact avec la pluralité de premiers aimants permanents (26), l'élément de maintien (46) étant disposé sur la surface des premiers aimants permanents (26) qui est la plus éloignée de la surface supérieure du rail (16).

9. Le système selon la revendication 1, comportant en outre un élément ferreux de maintien (46) et un élément électro conducteur recouvrant ledit au moins premier rail (16), l'élément de maintien (46) étant en contact avec les premiers aimants magnétiques (26) et étant disposé sur la surface des premiers aimants permanents (26) la plus éloignée de la surface supérieure du rail, l'élément recouvrant étant disposé au-dessus de la surface supérieure du premier rail (16).

10. Le système selon la revendication 1, comportant en outre des éléments de guidage (36) attelés à la voie (12) et à l'objet (14) de manière à maintenir ce dernier en alignement avec la voie.

11. Le système selon la revendication 1, comportant en outre des éléments de guidage (36) attelés à la voie (12) et des rouleaux complémentaires (36) attelés à l'objet afin de le maintenir en alignement avec la voie.

12. Le système selon la revendication 1, comportant en outre des rouleaux (36) attelés à l'objet (14), les rouleaux (36) étant distants d'un espace par rapport aux rails afin de permettre à l'objet de demeurer dans l'alignement de la voie (12).

13. Le système selon la revendication 1 dans lequel le troisième rail (18) prend la forme d'une plaque allongée et l'axe de rotation étant au moins substantiellement perpendiculaire à la plaque.

14. Le système selon la revendication 1 dans lequel le ou lesdits disques (42) comporte(nt) une paire de disques mobiles en rotation à proximité du troisième rail (18).

15. Le système selon la revendication 1 dans lequel le ou lesdits disques (42) est/sont attelé(s) de manière débrayable par rapport à l'objet (14) afin de permettre un déplacement commandé entre une position embrayée dans laquelle les aimants permanents du ou des disque(s) sont à proximité du troisième rail (18), et une position débrayée dans laquelle les aimants permanents du ou des disque(s) (42) sont distants du troisième rail (18) d'une distance suffisante supprimant une partie substantielle du courant tourbillonnant entre eux.

16. Le système selon la revendication 1 dans lequel le ou lesdits disques (42) comporte(nt) une paire de disques mobiles en rotation dans un voisinage du troisième rail (18), la paire de disques (42) ) étant attelée de manière débrayable par rapport à l'objet afin de commander un mouvement entre une position embrayée dans laquelle les aimants permanents du disque sont à proximité du troisième rail (18), et une position débrayée dans laquelle les aimants permanents du disque (42) sont distants du troisième rail (18) d'une distance suffisante pour éliminer une partie significative du courant tourbillonnant entre eux.

17. Une méthode de sustentation au dessus d'une voie (12) et de déplacement de cet objet le long de la voie (12), la méthode comportant :
la disposition sur la voie (12) d'une première pluralité d'aimants permanents (26) dont les polarités sont alignées vers le haut;
la mise en contact de chacun de ladite première pluralité d'aimants permanents avec un matériau ferreux (46);
la mise à disposition d'un objet (14) ayant une seconde pluralité d'aimants permanents (30) disposés dans l'alignement de la voie (12), la seconde pluralité d'aimants permanents (30) ayant leurs polarités alignées et s'opposant à la première pluralité d'aimants permanents (26);
la mise en contact de chacun de ladite seconde pluralité d'aimants permanents avec un matériau ferreux (64);
la disposition le long de la voie (12) d'un rail formé d'un matériau électro conducteur; et
la mise en rotation d'un disque (42) comportant des aimants permanents (66) en proximité du rail (18) réalisé en matériau électro-conducteur, les aimants permanents (66) du disque (42) provoquant le déplacement de l'objet le long de la voie (12).

18. Un chariot (14) de sustentation au-dessus et déplaçable le long d'une voie (12) comportant une paire de premiers rails de voie (16), chacun comportant une pluralité d'aimants permanents de voie (26) dont les polarités sont alignées, et un second rail de voie (18) réalisé en matériau électro conducteur et s'étendant le long de la voie, le chariot (14) comportant :
une paire de rails de chariot (28) pouvant être alignés de manière substantielle avec la paire des premiers rails de voie (16);
une pluralité d'aimants permanents de chariot (30) attelés à la paire de rails de chariot (28) et alignés en opposition par rapport à la polarité des aimants permanents des premiers rails de voie (16) afin d'amener le chariot en sustentation au-dessus de la voie (12);
un élément ferreux de maintien (64) pour le contact de la pluralité d'aimants permanents de chariot (30), et
un disque (42) attelé au chariot et mobile en rotation autour d'un axe de rotation par rapport au chariot, le disque (42) ayant une pluralité d'aimants permanents (66) distants de l'axe de rotation, le disque (42) étant disposé de manière qu'une partie entre dans un voisinage proche du second rail de voie (18) et peut être entraîné en rotation en présence du second rail de la voie (18) de manière à engendrer un courant tourbillonnant entre les aimants permanents (66) du disque (42) et le matériau électro-conducteur du second rail de piste (18) afin d'accélérer ou de freiner le chariot par rapport à la voie.

19. Le chariot de la revendication 18, comportant en outre des éléments de guidage attelés au chariot afin de le maintenir dans l'alignement de la voie.

20. Le chariot de la revendication 18, comportant en outre des rouleaux (36) attelés au chariot, les rouleaux étant positionnés de façon à être distant des premiers rails d'un espace permettant l'alignement du chariot avec la voie.

21. Le chariot de la revendication 18 dans lequel le second rail de voie présente la forme d'une plaque allongée et dans laquelle l'axe de rotation est aligné de façon substantiellement perpendiculaire à la plaque.

22. Le chariot de la revendication 18 dans lequel la pluralité d'aimants permanents de chariot sont attelés de manière mobile à la paire de rails de chariot (28).

23. Le chariot de la revendication 18 dans lequel la pluralité d'aimants permanents de chariot sont attelés à la paire de rails de chariot (28) de manière à permettre un déplacement latéral de chacun des aimants permanents respectivement par rapport au rail de chariot.

24. Le chariot de la revendication 18 dans lequel la pluralité d'aimants permanents du chariot (30) sont attelés de manière coulissante à la paire de rails de chariot afin de permettre un déplacement latéral par rapport au troisième rail.

25. Le chariot de la revendication 18 dans lequel la pluralité d'aimants permanents de chariot (30) sont attelés de manière coulissante à la paire de rail de chariot afin de permettre un déplacement latéral par rapport au troisième rail, et comporte en outre au moins un élément de guidage attelés à chacun des aimants permanents de chariot, ledit élément de guidage au moins étant disposé en vue d'un contact de l'un des deux premiers rails de voie (16) durant le fonctionnement de telle manière que le mouvement latéral du chariot (14) par rapport à la voie découle du mouvement latéral d'au moins un de la pluralité d'aimants de chariot (30).
